# FASCICULE DE BREVET EUROPEEN

(11) **EP 0 792 608 B1**
(45) Date de publication et mention de la délivrance du brevet: **02.05.2002**
(21) Numéro de dépôt: 97400431.9
(22) Date de dépôt: 26.02.1997
(51) Int. Cl.: A47J 37/06

(54) **Charnière pour plaques électriques et appareil de cuisson à charnière**
Scharnier für Elektrokochplatten und Kochgerät mit Scharnier
Hinge for electric cooking plates and cooking vessel with hinge

(30) Priorité: 28.02.1996 FR 9602485
(43) Date de publication de la demande: 03.09.1997
(73) Titulaire: SEB S.A., 69130 Ecully (FR)
(72) Inventeur: Gruaz, Denis, 74000 Annecy (FR)
(74) Mandataire: Keib, Gérard

(56) Documents cités:
- DE-C- 839 393
- FR-A- 1 006 170
- FR-A- 2 302 068
- FR-A- 2 516 352

## Description

La présente invention concerne une charnière pour plaques électriques disposées face à face en mode cuisson et un appareil de cuisson du type grill-viande ou croque-gaufre, équipé d'une telle charnière.

Les appareils de cuisson du type grill-viande, gaufrier, comportent de manière connue deux plaques de cuisson face à face entre lesquelles sont disposés les aliments à cuire. Une charnière relie généralement les deux plaques sur un des côtés de l'appareil, de sorte que les deux plaques sont écartées par pivotement autour de l'axe de la charnière.

Il est nécessaire dans ce type d'appareils de cuisson de faire passer les fils électriques d'alimentation d'une plaque à l'autre. Dans les réalisations connues, les fils passent à l'extérieur de l'appareil, un ressort de protection étant enroulé autour des fils.

Le document DE 839 393 divulgue un appareil du type grill dont l'alimentation électrique des deux plaques de cuisson se fait par deux fils électriques, ces fils allant d'une plaque à l'autre en passant au travers d'un tube creux faisant axe de rotation entre les deux plaques. Le cheminement des fils y est le suivant : provenant d'une plaque de cuisson, un fil entre dans un boîtier selon une direction perpendiculaire à l'axe de rotation des plaques de cuisson, et, en suivant la forme coudée du boîtier pénètre dans le tube creux par une de ses extrémités axiales selon une direction parallèle à l'axe de rotation, continue sa course dans le tube suivant cette même direction et en sort radialement grâce à l'ouverture faite sur la surface cylindrique, de là il rentre dans un cache puis dans la deuxième plaque de cuisson.

Or, une telle charnière a l'inconvénient, d'une part de nécessiter l'adjonction de pièces de protection supplémentaires (les boîtiers coudés) et, d'autre part, de rendre le montage de l'appareil long et difficile, chaque fil devant être inséré au travers des trous de passage de chaque pièce.

Le but de la présente invention est d'éviter que les fils électriques, s'étendant entre les deux plaques de cuisson, ne soient apparents sur l'extérieur de l'appareil de cuisson et d'augmenter ainsi la sécurité vis-à-vis de l'utilisateur.

La présente invention a également pour but de faciliter le montage de l'appareil de cuisson.

Ces buts sont atteints par la charnière décrite dans la revendication indépendante 1.

Le passage des fils électriques lors du montage de l'appareil est considérablement simplifié : il suffit en effet de passer les fils par les fentes, à partir d'une extrémité de la pièce formant axe, ce qui peut être réalisé à n'importe quel niveau de la longueur des fils électriques, contrairement aux montages classiques dans lesquels il est nécessaire d'enfiler l'extrémité des fils électriques au travers de trous.

De préférence, la partie mobile comporte une portion de liaison logée dans la pièce formant axe, ladite portion de liaison coulissant dans la pièce formant axe suivant une direction perpendiculaire à l'axe de rotation de la pièce formant axe, entre une position dite haute et une position dite basse des plaques de cuisson, et en ce que ladite portion de liaison traverse une ouverture de passage des fils électriques de la pièce formant axe.

On peut réaliser ainsi une charnière permettant d'avoir une course entre les deux plaques chauffantes afin de s'adapter à l'épaisseur des aliments à cuire.

Selon un autre aspect de l'invention, un appareil de cuisson, notamment grill-viande ou croque-gaufre, comprend deux plaques de cuisson électriques disposées face à face en mode de cuisson, les plaques de cuisson étant solidaires l'une de l'autre par l'intermédiaire d'une charnière conforme à l'invention.

D'autres particularités et avantages de l'invention apparaîtront encore dans la description ci-après.

Aux dessins annexés, donnés à titre d'exemples non limitatifs :
- la figure 1 est une vue en perspective éclatée d'un appareil de cuisson conforme à l'invention ;
- la figure 2 est une vue en perspective d'une charnière conforme à l'invention ;
- la figure 3 est une vue en coupe selon la ligne III-III à la figure 2 de la charnière en position basse ;
- la figure 4 est une vue analogue à la figure 3 de la charnière en position ouverte ; et
- la figure 5 est une vue analogue à la figure 3 de la charnière en position haute;
- la figure 6 est une vue en perspective éclatée d'un autre exemple de réalisation d'une charnière conforme à l'invention;
- la figure 7 est une vue en perspective de la charnière de la figure 6 en position fermée;
- la figure 8 est une vue en perspective de la charnière de la figure 6 en position basse;
- la figure 9 est une vue en perspective de la charnière ci-dessus en position haute (fonction gril);
- la figure 10 est une vue en perspective de la charnière ci-dessus en position ouverte à 180°, montrant le passage des fils électriques.

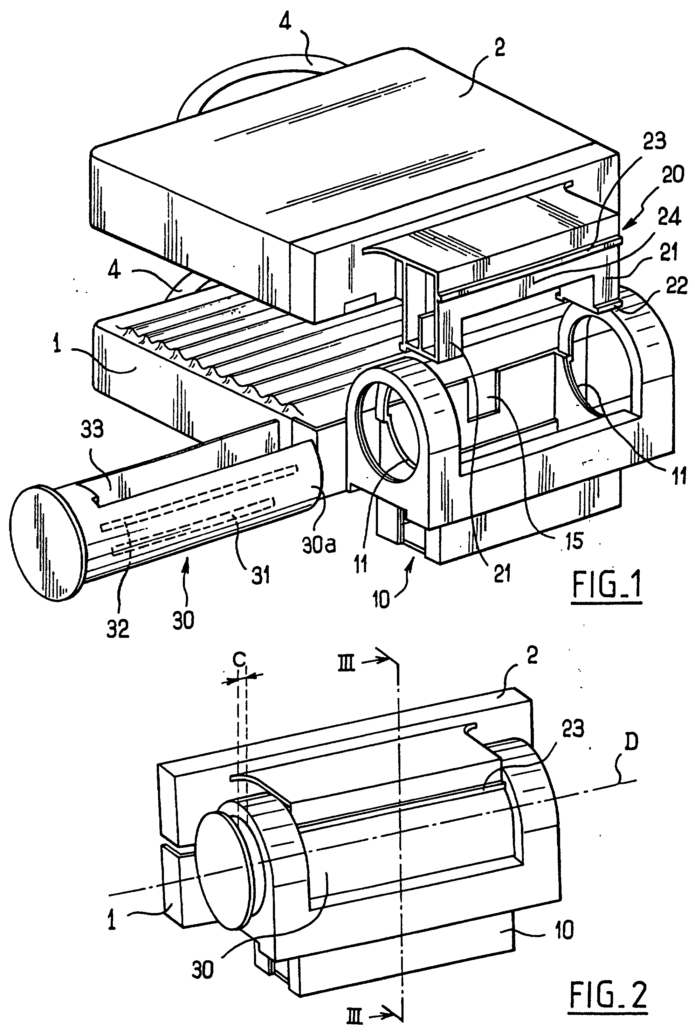

En référence tout d'abord à la figure 1, un appareil de cuisson du type grill-viande, gaufrier, comprend deux plaques chauffantes 1, 2, disposées face à face en mode de cuisson.

Une charnière permet de faire pivoter l'une des plaques 1, 2 par rapport à l'autre, afin de permettre la mise en place et le retrait des aliments à cuire.

Cette charnière comprend une partie fixe 10, solidaire d'une première plaque 1 correspondant à la plaque inférieure 1 de l'appareil et une partie mobile 20 solidaire de la seconde plaque 2, correspondant à la plaque supérieure 2 de l'appareil.

Une pièce 30 formant axe de rotation est solidaire en rotation de la partie mobile 20.

Cette pièce formant axe 30 a sensiblement une forme cylindrique, la partie fixe 10 comportant des paliers 11 adaptés à supporter les extrémités 30a de la pièce formant axe 30.

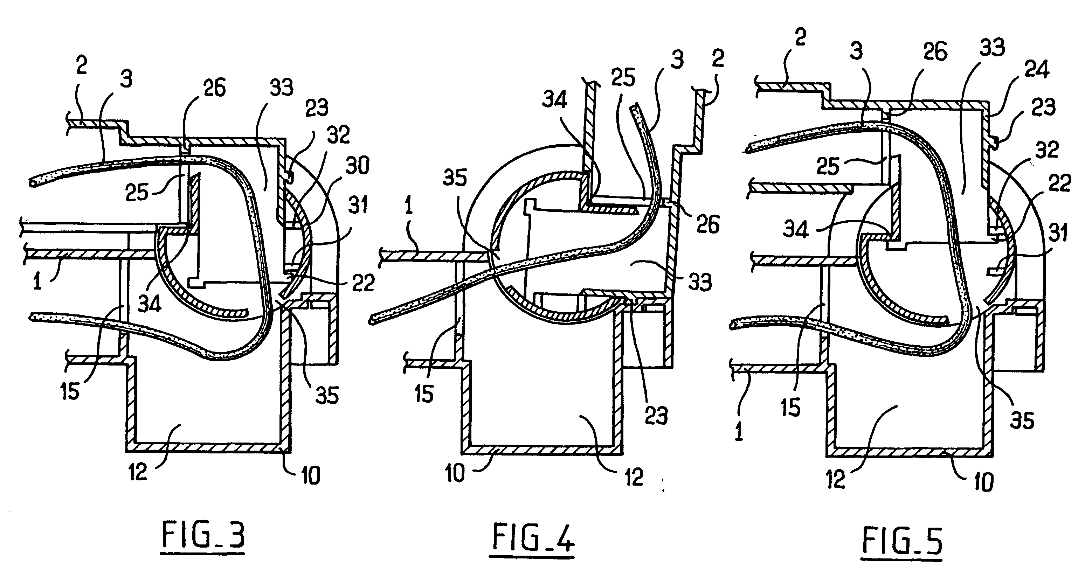

Comme bien illustré à la figure 3, la -partie fixe 10 et la partie mobile 20 comportent des ouvertures 15, 25 de passage des fils électriques 3 débouchant des plaques de cuisson 1, 2, la pièce formant axe 30 comprenant des ouvertures 33, 35 adaptées au passage de fils électriques 3 entre la partie mobile 20 et la partie fixe 10.

La pièce formant axe 30 a une forme sensiblement cylindrique, les ouvertures 33, 35 de passage des fils électriques 3 ayant la forme d'une fente s'étendant suivant l'axe de rotation de la pièce 30, c'est-à-dire suivant l'axe longitudinal de la forme cylindrique.

Ces ouvertures 33, 35 débouchent à une extrémité 30a de la pièce formant axe 30, ce qui permet de faire passer les fils électriques 3, même une fois raccordés électriquement à des résistances chauffantes logées dans les plaques de cuisson 1, 2.

La partie mobile 20 comporte une portion de liaison 21 qui est logée dans la pièce formant axe 30. Cette portion de liaison est constituée dans cet exemple de deux blocs 21, disposés aux extrémités de la partie mobile 20, qui traversent l'ouverture 33 de passage des fils électriques de la pièce formant axe.

Cette ouverture de passage 33 débouchant à une extrémité de la pièce formant axe, il suffit, lors du montage de la charnière, de disposer la partie mobile 20 au-dessus de la partie fixe 10, les portions de liaison 22 s'étendant entre les paliers 11 de la partie fixe 10 et d'introduire la pièce formant axe 30 dans les paliers 11, dans une direction parallèle à son axe de rotation D.

La partie fixe 10 comporte une portion formant caisson 12, les paliers 11 supportant la pièce formant axe 30 au-dessus du caisson 12.

Comme illustré aux figures 3 et 4, la pièce formant axe 30 est adaptée à pivoter d'un angle maximal égal sensiblement à 90° entre une position fermée, dans laquelle les plaques de cuisson 1, 2 sont disposées face à face et une position ouverte, illustrée à la figure 4, dans laquelle les plaques de cuisson 1, 2 sont sensiblement perpendiculaires l'une à l'autre, pour permettre notamment de disposer les aliments sur la plaque inférieure 1.

Le pivotement vers la position ouverte de la charnière est limité par une nervure 23 disposée en saillie sur une face extérieure de la partie mobile 20 qui vient en butée sur la partie fixe 10 de la charnière.

Une ouverture 35 de passage des fils électriques 3, entre la partie fixe 10 et l'intérieur de la pièce formant axe 30, débouche dans la portion formant caisson 12, quel que soit l'angle de pivotement de la pièce formant axe 30.

Les fils électriques 3 sont par conséquent toujours protégés par la portion formant caisson 12 et ne sont pas apparents pour l'utilisateur.

La portion formant caisson 12 a ainsi une dimension suffisante pour loger au moins un quart de la surface périphérique de la pièce formant axe 30, l'ouverture de passage 35 étant ménagée dans la surface périphérique de la pièce formant axe 30, le long d'une génératrice de la forme cylindrique.

La portion de liaison 21 coulisse dans la pièce formant axe 30, suivant une direction perpendiculaire à l'axe de rotation D, entre une position dite haute et une position dite basse des plaques de cuisson 1, 2.

Comme illustré aux figures 3 et 5, la pièce formant axe 30 comprend, sur une paroi intérieure en regard de la portion de liaison 21 de la partie mobile 20, des moyens formant butée 31 adaptés à coopérer avec des moyens de blocage 22 de la portion de liaison-21, de façon à bloquer la pièce de liaison dans la position basse des plaques de cuisson.

On évite ainsi la translation intempestive de la partie mobile 20 dans la pièce formant axe 30, notamment lorsque l'utilisateur appuie sur la plaque de cuisson supérieure 2 en position fermée, sur un côté de l'appareil de cuisson opposé à la charnière et auquel est fixée une poignée 4 de manipulation des plaques de cuisson 1, 2.

La pièce formant axe 30 est susceptible de coulisser sur les paliers 11 suivant son axe de rotation D entre une position de blocage dans laquelle les moyens formant butée 31 coopèrent avec les moyens de blocage 22 de la position de liaison 21 de ladite partie mobile 20 et une position libre dans laquelle le coulissement de la portion de liaison 21 est libre entre la position basse et la position haute des plaques de cuisson.

Cette course longitudinale c de la pièce formant axe est illustrée à la figure 2.

L'utilisateur peut par conséquent bloquer ou laisser libre la translation verticale de la partie mobile 20, par simple manipulation de la pièce formant axe 30 suivant son axe de rotation D.

Dans cet exemple, les moyens formant butée sont constitués d'une nervure 31 faisant saillie à l'intérieur de la pièce formant axe 30 et s'étendant parallèlement à l'axe de rotation D.

Les moyens de blocage 22 sont constitués d'une saillie 22 dirigée vers la face intérieure de la pièce formant axe 30.

Dans cet exemple, la nervure 31 est interrompue à une extrémité de la pièce formant axe 30 pour laisser le passage à la saillie 22 lorsque cette extrémité de la pièce formant axe 30 est légèrement décalée du palier 11, d'une longueur égale à la course c de la pièce formant axe 30.

Une nervure 32, identique à la nervure 31, est disposée également à l'intérieur de la pièce formant axe 30, de manière à coopérer avec les moyens de blocage 22 de la partie mobile et limiter ainsi la translation vers la position haute de la partie mobile 20.

Comme bien illustré aux figures 4 et 5, la partie mobile 20 comprend une paroi 24, opposée à la plaque de cuisson 2, qui s'étend dans la pièce formant axe 30 en position basse et au-dessus de cette pièce 30 lorsque la plaque de cuisson 2 est en position haute, de manière à être adjacente à la pièce formant axe 30 et à former ainsi avec cette pièce 30 un compartiment fermé pour protéger les fils électriques 30.

De préférence pour faciliter la rotation de la partie mobile 20 et de la pièce formant axe 30, cette dernière comprend un épaulement 34 s'étendant suivant une direction parallèle à l'axe de rotation D et sur lequel repose une paroi 26, solidaire de la partie mobile 20 et dans laquelle est ménagée l'ouverture 25 de passage des fils électriques 3 en direction de la plaque de cuisson 2.

On réalise ainsi de manière économique, un appareil de cuisson, tel qu'un grill-viande ou croque-gaufre, comprenant deux plaques de cuisson électriques 1, 2, disposées face à face en mode de cuisson et solidaires l'une de l'autre par l'intermédiaire d'une charnière permettant, de manière judicieuse, de loger les fils 3 d'alimentation électrique reliant les deux plaques de cuisson 1, 2 et de permettre à la fois le pivotement et la translation verticale d'une plaque 2 par rapport à l'autre plaque 1.

L'appareil de cuisson peut servir à la fois de grill-viande en position haute et de toaster ou gaufrier, en position basse.

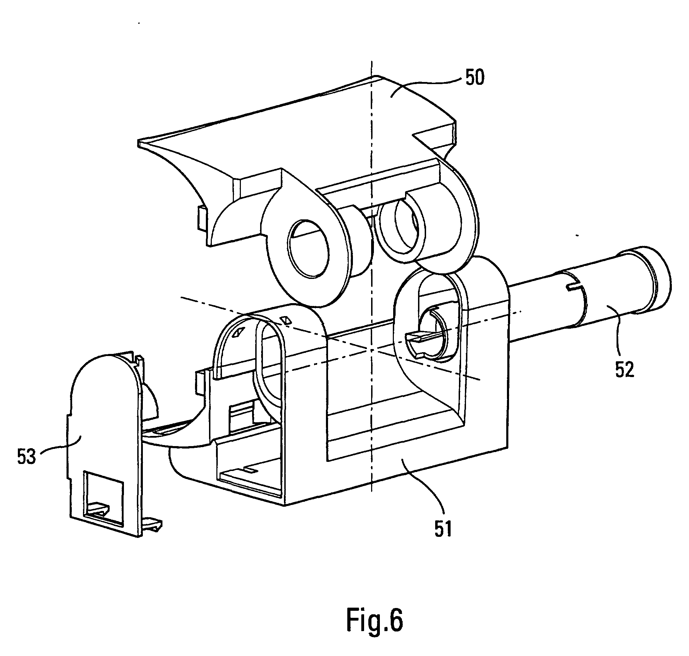

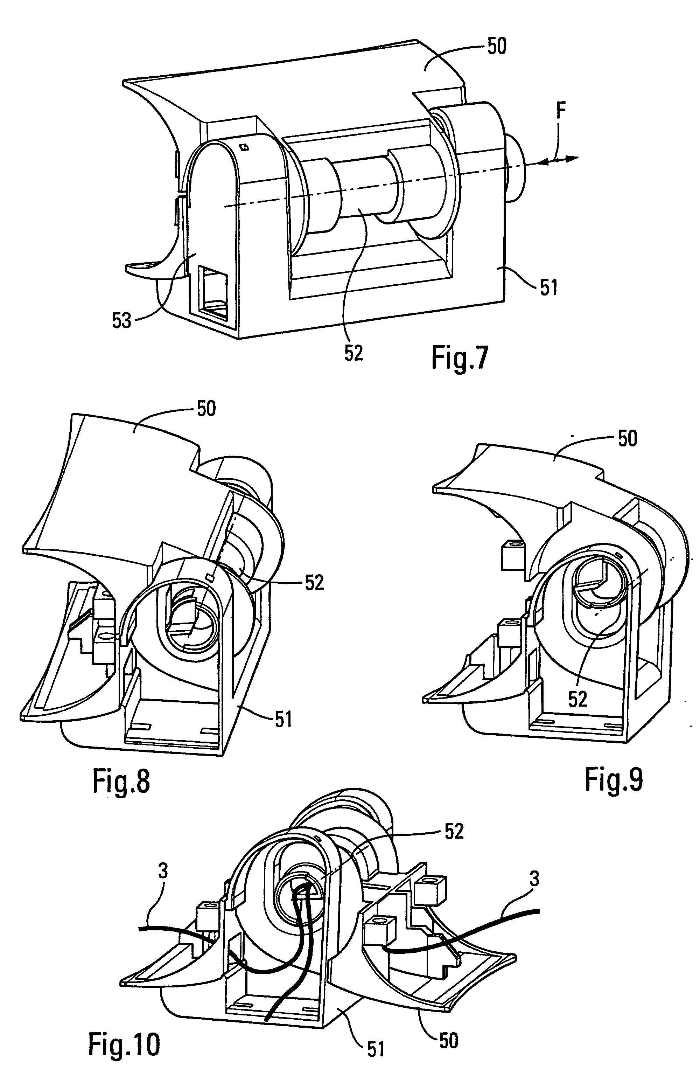

Comme dans l'exemple précédent, la charnière représentée sur les figures 6 à 10 est composée d'une partie supérieure 50, d'une partie inférieure 51 et d'un axe 52. L'axe 52 est immobilisé en rotation par rapport à la partie supérieure 50, mais cet ensemble peut tourner de 180° par rapport à la partie inférieure (voir Fig.7 et Fig.10). L'axe est légèrement mobile en translation de façon à bloquer ou non la course de translation verticale vers la fonction gril qui permet l'adaptation de la partie supérieure par rapport à la partie inférieure de l'épaisseur d'une viande par exemple (voir Fig.7, Fig.8 et Fig.9).

D'autre part, l'axe 52 creux permet également de faire passer les fils électriques 3 (Fig.10) de la partie supérieure à la partie inférieure sans protection et sans qu'il soit jamais possible de les voir depuis l'extérieur de l'appareil.

Les principales différences entre la charnière représentée sur les figures 1 à 5 et celle représentée sur les figures 6 à 10 sont les suivantes:
1) Les mouvements relatifs des pièces permettant de réaliser la fonction gril sont différents. Sur la première charnière, la pièce supérieure coulisse à l'intérieur de l'axe. Sur la seconde charnière, l'axe et la pièce supérieure coulissent dans la pièce inférieure.
2) La seconde charnière permet d'ouvrir l'appareil entre parties supérieure et inférieure à 180° au lieu de 95°. Elle permet aussi d'avoir un volume plus réduit que la première car l'axe présente un diamètre beaucoup plus petit.
3) La seconde charnière comporte une petite pièce supplémentaire, une plaque latérale 53 fermant la partie inférieure.
4) Le passage des fils électriques 3 est un peu différent (voir figure 10), mais le principe reste le même: pour aller de la partie supérieure à la partie inférieure, les fils électriques traversent l'axe et malgré les différentes positions où peut se trouver l'appareil on ne voit jamais ces derniers de l'extérieur.

Le principe de blocage de la charnière reste identique dans les deux cas.

Le mouvement de translation de l'axe pour bloquer la charnière en position basse est représenté par la flèche F sur la figure 7.

## Revendications

1. Charnière pour plaques de cuisson électriques (1, 2) disposées face à face en mode de cuisson, comportant une partie fixe (10) destinée à être solidaire d'une première plaque de cuisson (1), une partie mobile (20) destinée à être solidaire d'une seconde plaque de cuisson (2) et une pièce (30) formant axe de rotation, la partie fixe (10) et la partie mobile (20) comportant des ouvertures (15, 25) de passage des fils électriques (3) qui débouchent des plaques de cuisson (1, 2), la pièce formant axe (30) ayant une forme sensiblement cylindrique comprenant des ouvertures (33, 35) adaptées au passage de fils électriques (2) entre la partie mobile (20) et la partie fixe (10), **caractérisée en ce que** la partie mobile (20) est solidaire en rotation de la pièce (30) formant axe de rotation, et les ouvertures (33, 35) de passage des fils (3) de la pièce formant axe (30) ont la forme d'une fente s'étendant suivant l'axe de rotation (D) de ladite pièce (30) et débouchant à une extrémité (30a) de ladite pièce (30).

2. Charnière conforme à la revendication 1, **caractérisée en ce que** la partie mobile (20) comporte une portion de liaison (21) logée dans la pièce formant axe (30), ladite portion de liaison (21) coulissant dans la pièce formant axe (30), suivant une direction perpendiculaire à l'axe de rotation (D) de ladite pièce formant axe (30), entre une position dite haute et une position dite basse des plaques de cuisson (1, 2), et **en ce que** ladite portion de liaison (21) traverse une ouverture (33) de passage des fils électriques (3) de la pièce formant axe (30).

3. Charnière conforme à la revendication 2, **caractérisée en ce que** la pièce formant axe (30) comprend, sur une paroi intérieure en regard de la portion de liaison (21) de la partie mobile (20), des moyens formant butée (31) adaptés à coopérer avec des moyens de blocage (22) de la portion de liaison (21) de façon à bloquer la portion de liaison (21) dans ladite position basse des plaques de cuisson (1, 2).

4. Charnière conforme à la revendication 3, **caractérisée en ce que** la partie fixe (10) comprend des paliers (11) adaptés à supporter en rotation la pièce formant axe (30), ladite pièce formant axe (30) étant susceptible de coulisser sur lesdits paliers (11) suivant son axe de rotation (D) entre une position de blocage dans laquelle les moyens formant butée (31) coopèrent avec les moyens de blocage (22) de la portion de liaison (21) de ladite partie mobile (20) et une position libre dans laquelle le coulissement de la portion de liaison (21) est libre entre ladite position basse et ladite position haute.

5. Charnière conforme à l'une des revendications 1 à 4, **caractérisée en ce que** la partie fixe (10) comporte une portion formant caisson (12), des paliers (11) supportant ladite pièce formant axe (30) au-dessus de la portion formant caisson (12) et **en ce que** ladite pièce formant axe (30) est adaptée à pivoter d'un angle maximal égal sensiblement à 90° et comprend une ouverture de passage (35) des fils électriques (3) débouchant dans la portion formant caisson (12) quel que soit l'angle de pivotement de ladite pièce formant axe (30).

6. Appareil de cuisson, notamment grill-viande ou croque-gaufre, comprenant deux plaques de cuisson électriques (1, 2) disposées face à face en mode de cuisson, **caractérisé en ce que** lesdites plaques de cuisson (1, 2) sont solidaires l'une de l'autre par l'intermédiaire d'une charnière conforme à l'une des revendications 1 à 5.

## Patentansprüche

1. Scharnier für elektrische Kochplatten (1,2), die im Kochmodus gegenüberliegend angeordnet sind, enthaltend einen unbeweglichen Teil (10), der dazu bestimmt ist, mit einer ersten Kochplatte (1) verbunden zu sein, einen beweglichen Teil (20), der dazu bestimmt ist, mit einer zweiten Kochplatte (2) verbunden zu sein und ein eine Drehachse (30) bildendes Teil (30), wobei der unbewegliche Teil (10) und der bewegliche Teil (20) für die Durchführung von elektrischen Leitungen (3) Öffnungen (15, 25) enthalten, die die Kochplatten (1,2) aufnehmen, wobei das die Achse (30) bildende Teil eine praktisch zylindrische Form aufweist, die Öffnungen (33, 35) umfasst, die zur Durchführung von elektrischen Leitungen (2) zwischen dem beweglichen Teil (20) und dem unbeweglichen Teil (10) angepasst sind, **dadurch gekennzeichnet, dass** der bewegliche Teil (20) drehbar mit dem eine Drehachse bildenden Teil (30) verbunden ist, und die Öffnungen (30, 35) für die Durchführung von Leitungen (3) des die Achse (30) bildenden Teils die Form eines Schlitzes aufweisen, der sich entlang der Drehachse (D) des Teils (30) erstreckt und in ein Ende (30a) des Teils (30) einmündet.

2. Scharnier gemäß Anspruch 1, **dadurch gekennzeichnet, dass** der bewegliche Teil (20) einen Verbindungsabschnitt (21) enthält, der in das die Achse (30) bildende Teil eingebaut ist, wobei sich der Verbindungsabschnitt (21) in dem die Achse (30) bildenden Teil, einer senkrechten Richtung zu der Drehachse (D) des die Achse (30) bildenden Teils entlang, zwischen einer als hoch bezeichneten Position und einer als tief bezeichneten Position der Kochplatten (1,2) verschiebt, und dadurch, dass der Verbindungsabschnitt (21) quer durch eine Öffnung (33) für die Durchführung von elektrischen Leitungen (3) des die Achse (30) bildenden Teils geht.

3. Scharnier gemäß Anspruch 2, **dadurch gekennzeichnet, dass** das die Achse (30) bildende Teil über einer inneren Wand in Bezug auf das Verbindungsstück (21) des beweglichen Teils (20) Mittel enthält, die einen Anschlag (31) bilden und die angepasst sind, um mit Blockiermitteln (22) des Verbindungsabschnittes (21) zu kooperieren, um so den Verbindungsabschnitt (21) in der tiefen Position der Kochplatten (1,2) zu blockieren.

4. Scharnier gemäß Anspruch 3, **dadurch gekennzeichnet, dass** der unbewegliche Teil (10) Lager (11) enthält, die angepasst sind, um das die Achse (30) bildende Teil drehbar zu tragen, wobei das die Achse (30) bildende Teil geeignet ist, sich auf den Lagern (11) entlang seiner Drehachse (D) zwischen einer Blockierposition, in der die einen Anschlag (31) bildenden Mittel mit den Blockiermitteln (22) des Verbindungsabschnittes (21) des beweglichen Teils (20) kooperieren, und einer freien Position zu verschieben, in der das Verschieben des Verbindungsabschnittes (21) zwischen der tiefen Position und der hohen Position frei ist.

5. Scharnier gemäß irgendeinem der Ansprüche 1 bis 4, **dadurch gekennzeichnet, dass** der unbewegliche Teil (10) einen einen Behälter (12) bildenden Abschnitt enthält, wobei die Lager (11) das die Achse (30) bildende Teil oberhalb des den Behälters (12) bildenden Abschnittes tragen, und dadurch, dass das die Achse (30) bildende Teil angepasst ist, um mit einem maximalen Winkel auszuschwenken, der praktisch gleich 90° ist, und eine Öffnung (35) für die Durchführung von den elektrischen Leitungen (3) enthält, die in den den Behälter (12) bildenden Abschnitt münden, wie auch immer der Schwenkwinkel des die Achse (30) bildenden Teils ist.

6. Kochvorrichtung, nämlich, ein Fleischgrill oder ein Waffeleisen, enthaltend zwei elektrische Kochplatten (1,2), die im Kochmodus gegenüberliegend angeordnet sind, **dadurch gekennzeichnet, dass** die Kochplatten (1,2) durch Vermittlung von einem Scharnier gemäß irgendeinem der Ansprüche 1 bis 5 miteinander verbunden sind.

## Claims

1. Hinge for electric hotplates (1, 2) arranged face to face in cooking mode, comprising a fixed part (10) intended to be secured to a first hotplate (1), a moving part (20) intended to be secured to a second hotplate (2) and a piece (30) forming a hinge pin, the fixed part (10) and the moving part (20) comprising openings (15, 25) for the passage of the electric wires (3) which emerge from the hotplates (1, 2), the pin-forming piece (30) having a roughly cylindrical shape comprising openings (33, 35) suited to the passage of electric wires (2) between the moving part (20) and the fixed part (10), **characterized in that** the moving part (20) rotates as one with the piece (30) that forms the hinge pin, and the passage openings (33, 35) for the wires (3) in the pin-forming piece (30) have the shape of a slot extending along the axis of rotation (D) of the said piece (30) and opening at one end (30a) of the said piece (30).

2. Hinge according to Claim 1, **characterized in that** the moving part (20) comprises a connecting portion (21) lodged in the pin-forming piece (30), the said connecting portion (21) sliding in the pin-forming piece (30) in a direction perpendicular to the axis of rotation (D) of the said pin-forming piece (30) between a position known as the up position and a position known as the down position of the hotplates (1, 2), and **in that** the said connecting portion (21) passes through a passage opening (33) for the electric wires (3) in the pin-forming piece (30).

3. Hinge according to Claim 2, **characterized in that** the pin-forming piece (30) comprises, on an interior wall facing the connecting portion (21) of the moving part (20), means (31) forming a stop designed to collaborate with means (22) for immobilizing the connecting portion (21) in such a way as to immobilize the connecting portion (21) in the said down position of the hotplates (1, 2).

4. Hinge according to Claim 3, **characterized in that** the fixed part (10) comprises bearings (11) designed to support, in its rotation, the pin-forming piece (30), the said pin-forming piece (30) being capable of sliding on the said bearings (11) along its axis of rotation (D) between an immobilizing position in which the stop-forming means (31) collaborate with the immobilizing means (22) of the connecting portion (21) of the said moving part (20), and a free position in which the connecting portion (21) is free to slide between the said down position and the said up position.

5. Hinge according to one of Claims 1 to 4, **characterized in that** the fixed part (10) comprises a portion (12) forming a box section, bearings (11) supporting the said pin-forming piece (30) above the portion (12) that forms a box section, and **in that** the said pin-forming piece (30) is designed to pivot through a maximum angle roughly equal to 90° and comprises an opening (35) for the passage of the electric wires (3) which opens into the portion (12) forming a box section, regardless of the angle through which the said pin-forming piece (30) is pivoted.

6. Cooking appliance, particularly a griddle or sandwich toaster, comprising two electric hotplates (1, 2) arranged face to face in cooking mode, **characterized in that** the said hotplates (1, 2) are secured to one another via a hinge according to one of Claims 1 to 5.
